(19) Europäisches Patentamt / European Patent Office / Office européen des brevets

(11) **EP 1 863 682 B1**

(12) **EUROPÄISCHE PATENTSCHRIFT**

(45) Veröffentlichungstag und Bekanntmachung des Hinweises auf die Patenterteilung:
**16.07.2008   Patentblatt 2008/29**

(21) Anmeldenummer: **06707913.7**

(22) Anmeldetag: **31.01.2006**

(51) Int Cl.:
*B60R 21/01* *(2006.01)*        *B60R 21/34* *(2006.01)*

(86) Internationale Anmeldenummer:
**PCT/EP2006/050539**

(87) Internationale Veröffentlichungsnummer:
**WO 2006/100146 (28.09.2006 Gazette 2006/39)**

(54) **VERFAHREN ZUR ERZEUGUNG EINES AUSLÖSESIGNALS FÜR EINE FUSSGÄNGERSCHUTZVORRICHTUNG**

METHOD FOR GENERATING A TRIGGERING SIGNAL FOR A PEDESTRIAN PROTECTION DEVICE

PROCEDE DE GENERATION D'UN SIGNAL DE DECLENCHEMENT POUR UN DISPOSITIF DE PROTECTION DES PIETONS

(84) Benannte Vertragsstaaten:
**DE ES FR GB**

(30) Priorität: **24.03.2005   DE 102005013594**

(43) Veröffentlichungstag der Anmeldung:
**12.12.2007   Patentblatt 2007/50**

(73) Patentinhaber: **ROBERT BOSCH GMBH**
**70442 Stuttgart (DE)**

(72) Erfinder: **MACK, Frank**
**70376 Stuttgart (DE)**

(56) Entgegenhaltungen:
EP-A- 1 691 213          WO-A-20/06074672
DE-A1- 10 100 880        DE-A1- 10 206 351
DE-A1- 10 256 950        DE-A1- 10 354 035
DE-B3- 10 327 115

**Beschreibung**

Stand der Technik

Die Erfindung geht aus von einem Verfahren zur Erzeugung eines Auslösesignals für eine Fußgängerschutzvorrichtung nach der Gattung des unabhängigen Patentanspruchs 1.

Durch die Ankündigung der Einführung eines EU-Gesetzes zur Reduzierung von Verletzungen eines Fußgängers bei einem Zusammenstoß zwischen einem Fußgänger und einem Fahrzeug, müssen neue Fahrzeuge so konstruiert werden, dass die Verletzungen des Fußgängers bei einer Kollision innerhalb der in diesem EU-Gesetz geforderten Grenzen bleiben.

Eine erste Strategie zur Reduzierung von Verletzungen von Fußgängern zielt darauf ab, durch Änderungen an der Stoßstange und am Design des Fahrzeuges eine Knautschzone für den Fußgänger zu schaffen, um somit durch eine passive Lösung die Verletzungsgefahr zu reduzieren.

Eine zweite Strategie versucht durch eine geeignete Sensorik den Aufprall eines Fußgängers zu erkennen und durch ein anschließendes aktives Ansteuern einer Fußgängerschutzvorrichtung, wie beispielsweise von Außenairbags an den A-Säulen und/oder durch Anheben der Motorhaube, die benötigte Knautschzone zu schaffen. Bei der aktiven Lösung können die verschiedensten Sensorprinzipien benutzt werden, wie z.B. Beschleunigungs-, Druck-, Klopfsensoren, piezoelektrische und/oder optische Sensoren usw. Die Sensoren können beispielsweise an einem Kühlerträger oder an einem Stoßfänger angeordnet werden.

Aus dem Stand der Technik sind ein Verfahren und eine Vorrichtung bekannt, welche basierend auf Eingangssignalen, vorzugsweise Beschleunigungssignalen, eine Auslöseentscheidung für Fußgängerschutzmittel treffen, wobei die Vorrichtung einen Merkmalsextraktionsblock und eine Entscheidungslogik umfasst.

Vorteile der Erfindung

Das erfindungsgemäße Verfahren zur Erzeugung eines Auslösesignals für eine Fußgängerschutzvorrichtung mit den Merkmalen des unabhängigen Patentanspruchs 1 hat demgegenüber den Vorteil, dass aus erfassten Sensordaten nach einer erkannten Kollision mit einem Objekt Merkmale erzeugt werden, welche zur Ermittlung einer Objektmasse und einer Objekthärte ausgewertet werden, wodurch eine sichere und robustere Ansteuerung einer Fußgängerschutzvorrichtung ermöglicht wird. Das Auslösesignal für die Fußgängerschutzvorrichtung wird in vorteilhafter Weise nur erzeugt, wenn die ermittelte Objektmasse und die ermittelte Objekthärte innerhalb eines Auslösebereichs liegen, welcher eine Kollision mit einem Fußgänger repräsentiert. Somit entscheidet das erfindungsgemäße Verfahren in vorteilhafter Weise ausgehend von den verfügbaren Sensorsignalen, ob in der vorliegenden Aufprallsituation eine Kollision mit einem Fußgänger vorliegt und eine Aktivierung der Fußgängerschutzvorrichtung erforderlich ist oder ob eine andere Aufprallsituationen vorliegt, in welcher eine Auslösung der Fußgängerschutzmittel unerwünscht ist, wie z.B. bei einer Kollision mit einem Leitpfosten oder mit einem anderen Fahrzeug.

Die Klassifizierung der Objekte nach ihrer Masse, d.h. nach einer bei einer Kollision wirksamen effektiven Masse, und ihrer Steifigkeit führt dazu, dass eine sichere und robuste Ansteuerung der Schutzmittel für Fußgänger ermöglich wird. Dadurch wird ein optimaler Schutz der Fußgänger bei gleichzeitiger Minimierung der Kosten gewährleistet, die durch eine ungewollte Auslösung der Fußgängerschutzvorrichtung, beispielsweise bei Kollisionen mit anderen Objekten, entstehen können. Außerdem wird verhindert, dass der Fahrer durch eine Auslösung, z.B. durch eine Aufstellung der Motorhaube, irritiert und in seinem Lenkverhalten beeinträchtigt wird.

Erfindungskennzeichnend ist, dass die Sensordaten Beschleunigungsinformationen umfassen, welche beispielsweise von einem einzelnen aber auch von mehreren Beschleunigungssensoren zur Verfügung gestellt werden. Das Verfahren kann in ähnlicher Form auch für andere Sensorarten, wie z.B. Klopfsensoren angewandt werden.

Dadurch, dass die Frontstruktur des Fahrzeugs nach einem Aufprall in der Regel Schwingungen durchführt und dass härtere Objekte zu höherfrequenteren Schwingungen der Frontstruktur führen, wird zur Ermittlung der Objekthärte in vorteilhafter Weise eine Periodendauer der Beschleunigungsinformationen ausgewertet, wobei aus der Periodendauer eine zur Objekthärte korrespondierende Frequenz bestimmt wird.

In erfindungsgemäßerWeise wird zur Auswertung und Bestimmung der Periodendauer der Beschleunigungsinformationen die ermittelte Objektmasse berücksichtigt, wodurch die Genauigkeit bei der Bestimmung der Periodendauer verbessert wird.

Durch die in den abhängigen Ansprüchen aufgeführten Maßnahmen und Weiterbildungen sind vorteilhafte Verbesserungen des im unabhängigen Patentanspruch 1 angegebenen Verfahrens zur Erzeugung eines Auslösesignals für eine Fußgängerschutzvorrichtung möglich.

Insbesondere ist es von Vorteil, dass aus den Beschleunigungsinformationen (a) zur Ermittlung der Objektmasse ($m_o$) ein erstes Integral berechnet wird, welches einer Geschwindigkeitsänderung (dv) entspricht. Die Bestimmung der Objektmasse ($m_o$) erfolgt dann beispielsweise über ein einfaches Modellsystem, welches auf dem Impulserhaltungsgesetz basiert, wobei die Objektmasse ($m_o$) bei einer bekannten Masse ($m_F$) einer Fahrzeugfront und bei einer bekannten Geschwindigkeit ($v_0$) des Fahrzeugs vor der Kollision gemäß der Gleichung $m_o = -m_F * dv / (v_0 + dv)$ berechnet werden kann.

Die Objekthärte kann in vorteilhafter Weise aus einer Schwingungsenergie abgeleitet werden, welche beispielsweise durch eine Integration eines Quadrates der Beschleunigungsinformation berechnet wird, wobei die berechnete Schwingungsenergie ein Maß für die Objekthärte ist, und wobei die Schwingungsenergie umso größer ist, je höherfrequent die Schwingungen sind.

Zusätzlich oder alternativ kann die Objekthärte in vorteilhafter Weise aus einem Integral des Betrages der Beschleunigungsinformationen ermittelt werden, wobei das berechnete Integral ein Maß für die Objekthärte ist, und wobei das Integral umso größer ist, je höherfrequent die Schwingungen sind.

In vorteilhafter Weise kann die Bestimmung der Objekthärte dadurch verbessert werden, dass die ermittelte Objektmasse zur Bestimmung der Objekthärte berücksichtigt wird.

Insbesondere ist es vorteilhaft, dass die Sensordaten von mehreren Sensoren zur Merkmalserzeugung mit oder ohne Gewichtung gemittelt werden. Die Gewichtung der Merkmale kann beispielsweise unter Verwendung der Informationen über einen Auftreffpunkt durchgeführt werden, z.B. indem die Merkmale des dem Aufreffpunkt am nächsten liegenden Sensors am stärksten gewichtet werden.

Weiterhin ist es möglich, die Grenzen des Auslösebereichs in Abhängigkeit von der Zeit und/oder vom Auftreffpunkt und/oder von der Geschwindigkeit und/oder von der Temperatur zu bestimmen, wodurch die Objektklassifizierung, d.h. die Fußgängererkennung, weiter verbessert werden kann.

Aus EP 1691213 A1 als älterer nicht vorveröffentlichter europäischer Patentanmeldung ist es bekannt, die Ansteuerung von Personenschutzmitteln in Abhängigkeit von der Masse und der Härte des Aufprallobjekts vorzunehmen. Dabei wird eine Krafteinwirkung und eine Relativgeschwindigkeit zwischen dem Aufprallobjekt und dem Fahrzeug verwendet.

Eine weitere Verbesserung der Objektklassifizierung ergibt sich, wenn die Grenzen für den Auslösebereich der masseabhängigen Merkmale in Abhängigkeit von den steifigkeitsabhängigen Merkmalen festgelegt werden und/ oder wenn die Grenzen für den Auslösebereich der steifigkeitsabhängigen Merkmale in Abhängigkeit von den masseabhängigen Merkmalen festgelegt werden.

Zeichnung

Ein Ausführungsbeispiel der Erfindung ist in der Zeichnung dargestellt und wird in der nachfolgenden Beschreibung näher erläutert.

Es zeigen

Figur 1    ein Blockschaltbild einer Vorrichtung zur Durchführung des erfindungsgemäßen Verfahrens,

Figur 2    ein schematisches Diagramm zur Klassifizierung von Objekten nach Objektgewicht und Objekthärte,

Figur 3    ein schematisches Diagramm zur Darstellung von Beschleunigungssignalen bei einer Kollision mit einem einen Fußgänger simulierenden Legform-Impaktor,

Figur 4    ein schematisches Diagramm zur Darstellung von Beschleunigungssignalen bei einer Kollision mit einem sehr harten Gegenstand,

Figur 5    ein schematisches Diagramm zur Darstellung von Betragsintegralen des Beschleunigungssignals bei einer Kollision mit einem einen Fußgänger simulierenden Legform-Impaktor,

Figur 6    ein schematisches Diagramm zur Darstellung von Betragsintegralen des Beschleunigungssignals bei einer Kollision mit einem sehr harten Gegenstand, und

Figur 7    ein schematisches Diagramm zur Darstellung von unterschiedlichen Verläufen eines Merkmals für verschiedene Objekte, welche mit 20km/h mittig die Fahrzeugfront treffen.

Beschreibung

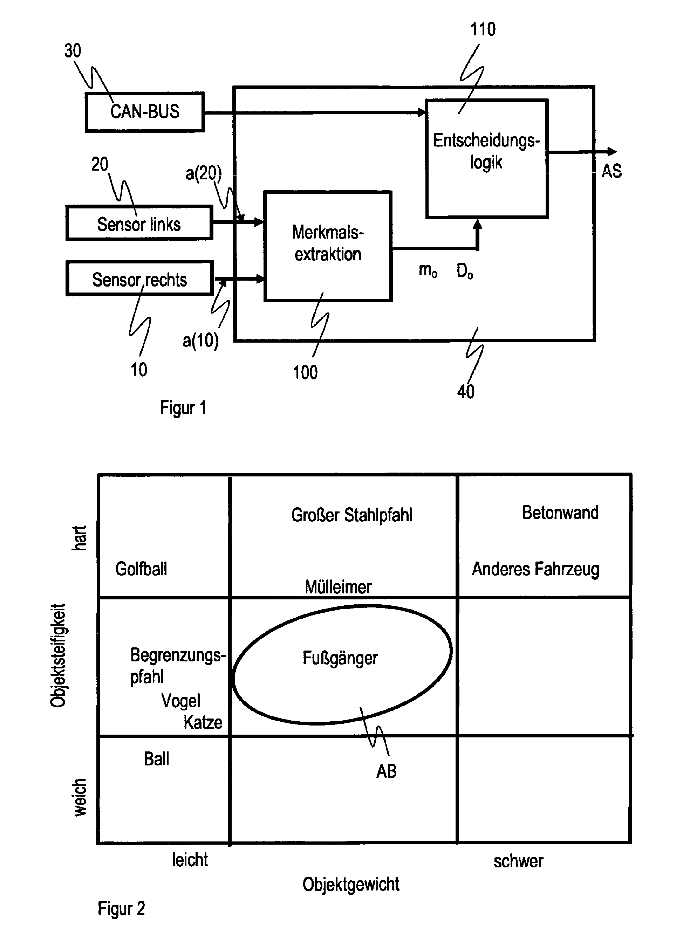

Wie aus Fig. 1 ersichtlicht ist, umfasst das dargestellte Ausführungsbeispiel einer Vorrichtung zur Durchführung eines Verfahrens zur Erzeugung eines Auslösesignals AS für eine nicht dargestellte Fußgängerschutzvorrichtung eine Auswerte- und Steuereinheit 40 und zwei Sensoren 10, 20, welche im dargestellten Ausführungsbeispiel als im Stoßfänger eingebaute Beschleunigungssensoren ausgeführt sind. Durch den Einbau im Stoßfänger ist eine Unterscheidung von Fußgängerkollisionen zu Fahrten auf Schlechtwegstrecken oder Überfahren von Bordsteinen und Schlaglöcher besonders zuverlässig möglich. Das erfindungsgemäße Verfahren kann auch durch Vorrichtungen mit anderen Sensoren, wie z.B. Klopfsensoren, ausgeführt werden. Außerdem ist eine Erweiterung der Vorrichtung auf mehr als zwei Sensoren möglich.

Wie weiter aus Fig. 1 ersichtlich ist, umfasst die Auswerte- und Steuereinheit 40 einen Merkmalsextraktionsblock 100 und eine Entscheidungslogik 110. Der Merkmalsextraktionsblock 100 erzeugt aus Sensordaten a(10), a(20) der Sensoren 10, 20 Merkmale, welche zur Ermittlung einer Objektmasse $m_O$, d.h. einer bei einer Kollision wirksamen effektiven Masse, und/oder einer Objekthärte $D_O$ ausgewertet werden. Die Entscheidungslogik 110 erzeugt das Auslösesignal AS für die Fußgängerschutzvorrichtung, wenn die ermittelte Objektmasse $m_O$ und/oder die ermittelte Objekthärte $D_O$ innerhalb eines Auslösebereichs AB liegen, welcher eine Kollision mit einem Fußgänger repräsentiert. Zusätzlich wertet die Entscheidungslogik 110 Signale aus, beispielsweise eine Fahrzeugeigengeschwindigkeit $v_0$, welche von einem CAN-Bussystem 30 zur Verfügung gestellt werden.

Dass erfindungsgemäße Verfahren beruht auf der Beobachtung, dass sich Menschen hauptsächlich durch ihre Masse und ihre Härte bzw. Steifigkeit von sehr vielen anderen Objekten unterscheiden, für welche keine Auslösung der Fußgängerschutzmittel gewünscht wird Fig. 2 zeigt ein schematisches Diagramm zur Klassifizierung von Objekten nach Objektgewicht und Objekthärte. Das erfindungsgemäße Verfahren erzeugt aus den Sensordaten, vorzugsweise aus den Beschleunigungsinformationen, Merkmale, welche einen Rückschluss auf die Objektmasse $m_O$ und/oder auf die Objekthärte $D_O$ liefern. Nach der Erzeugung wird überprüft, ob diese die Objektmasse $m_O$ und/oder auf die Objekthärte $D_O$ repräsentierende Merkmale in einem für einen Menschen typischen Bereich für die Masse und die Härte liegen. Ist das betroffene Objekt zu leicht oder zu schwer oder zu hart oder zu weich, dann findet keine Auslösung statt.

Das 1. Integral der Beschleunigung a, welches einer Geschwindigkeitsänderung dv entspricht, ist beispielsweise ein Merkmal, welches einen Rückschluss auf die Objektmasse $m_O$ zulässt. Die Bestimmung der Objektmasse $m_O$ erfolgt dann beispielsweise über ein einfaches Modellsystem, welches auf dem Impulserhaltungsgesetz basiert. Das Objekt mit der Masse $m_O$ ist vor dem Aufprall bzw. Stoß in Ruhe, und die Fahrzeugfront mit der Masse $m_F$ bewegt sich mit der Geschwindigkeit $v_0$. Nach dem Stoß bzw. Aufprall bewegen sich das Objekt und die Fahrzeugfront mit der Geschwindigkeit $v_1 = v_0 + dv$, wobei die Geschwindigkeit dv negative Werte annimmt. Aus der Impulserhaltung folgt die Gleichung (1).

$$(m_o + m_F)*(v_0 + dv) = m_F * v_0 \qquad\qquad (1)$$

Durch Umformen der Gleichung (1) ergibt sich zur Berechnung der Objektmasse $m_O$ die Gleichung (2).

$$m_o = -m_F * dv / (v_0 + dv) \qquad\qquad (2)$$

Da die Masse $m_F$ der Fahrzeugfront bekannt ist, und $v_0$ mit Hilfe einer über das CAN-Bussystem zur Verfügung gestellten Geschwindigkeit abgeschätzt werden kann, wird mit der Geschwindigkeitsänderung dv ein massenabhängiges Merkmal zur Verfügung, welches eine Schätzung der Objektmasse $m_O$ ermöglicht.

Da die Frontstruktur des Fahrzeugs und somit der Stoßfänger nach dem Aufprall in der Regel Schwingungen durchführt, ist es besonders vorteilhaft das Minimum der negativen Geschwindigkeitsänderung dv in einem ersten Zeitbereich, typischerweise 10ms, nach einer Erkennung einer Kollision mit einem Objekt auszuwerten. Die Kollision mit einem Objekt wird beispielsweise dadurch erkannt, dass der Betrag des Beschleunigungssignals einen vorgegebenen Schwellwert erreicht und/oder überschreitet. Zusätzlich oder alternativ können auch andere Merkmale die mit der Masse korrelieren benutzt werden.

Bei einem System mit mehreren Sensoren 10, 20 werden aus den Sensordaten a(10), a(20) die entsprechenden zugehörigen Merkmale erzeugt und aus den Merkmalen der einzelnen Sensoren 10, 20, beispielsweise durch eine Mittelung mit oder ohne Gewichtung, ein gemeinsames Merkmal generiert. Die Gewichtung der Merkmale kann beispielsweise unter Verwendung der Informationen über einen Aufprallpunkt durchgeführt werden, z.B. indem die Merkmale des dem Aufprallpunkt am nächsten liegenden Sensors am stärksten gewichtet werden.

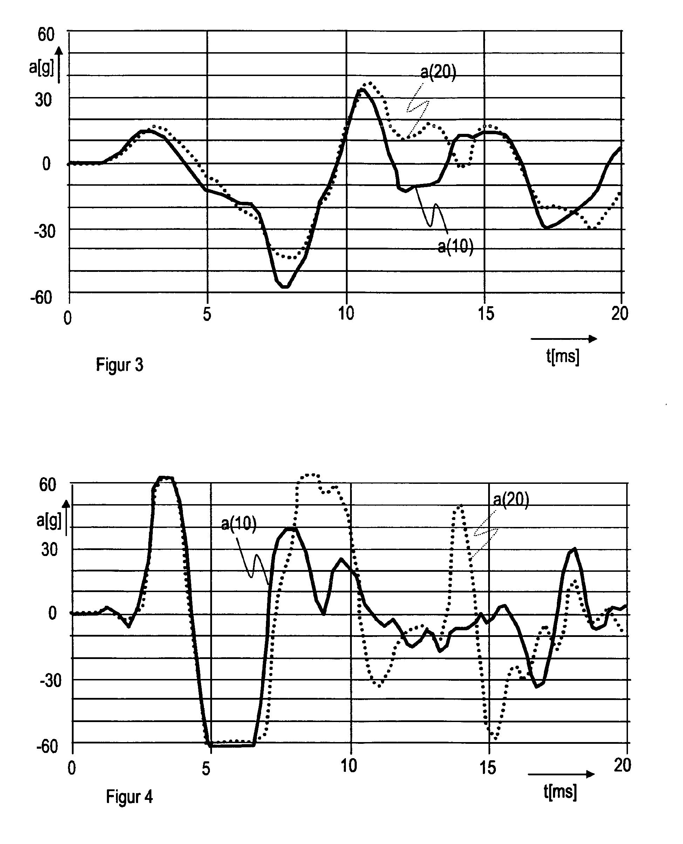

Die Merkmale, welche Rückschlüsse auf die Objektsteifigkeit $D_O$ erlauben, beruhen beispielsweise auf der Beobachtung, dass härtere Objekte zu höherfrequenteren Schwingungen des Stoßfängers führen. Figur 3 zeigt ein schematisches Diagramm, welches das vom ersten Beschleunigungssensor 10 erfasste Beschleunigungssignal a(10) und das vom zweiten Beschleunigungssensor erfasste Beschleunigungssignal a(20) bei einer Kollision mit einem einen Fußgänger simulierenden Legform-Impaktor darstellt, und Figur 4 zeigt ein schematisches Diagramm der Beschleunigungssignale a(10) und a(20) bei einer Kollision mit einem sehr harten Gegenstand, beispielsweise mit einem Stahlrohr. Wie durch einen Vergleich der Figuren 3 und 4 ersichtlich ist, erzeugt das härtere Stahlrohr mit gleicher Masse deutlich höherfrequentere Schwingungen als ein Fußgänger, welcher durch den Legform-Impaktor simuliert wird. Dies kann dadurch erklärt werden, dass die Frequenz ω der Schwingung einer Masse, welche an einer Feder befestigt ist, proportional zur Wurzel der Steifigkeit D ist. Dieser Zusammenhang ist in Gleichung (3) dargestellt.

$$\omega = \sqrt{\frac{D}{m}} \qquad\qquad (3)$$

Zur Schätzung der Frequenz kann die Periodendauer der Beschleunigungssignale a(10) und a(20) ausgewertet werden. Zur Bestimmung und Auswertung der Periodendauer der Beschleunigungssignale a(10) und a(20) kann zusätzlich die ermittelte Objektmasse $m_O$ benutzt werden, wodurch die Genauigkeit bei der Bestimmung der Periodendauer verbessert werden kann.

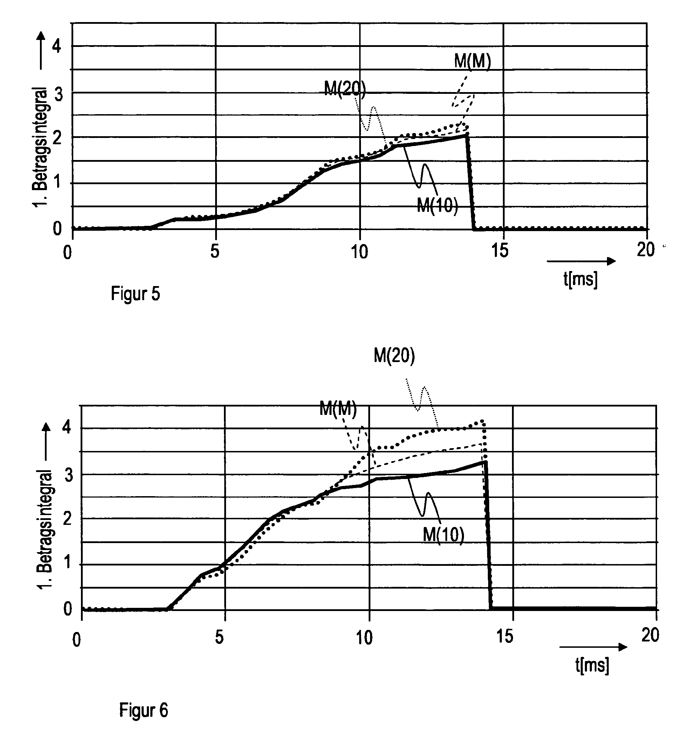

Zusätzlich oder alternativ kann zur Schätzung der Objektsteifigkeit $D_O$ die Schwingungsenergie durch eine Integration des Quadrats der Beschleunigungsinformation a(10), a(20) ermittelt werden. Eine weitere Möglichkeit zur Schätzung der Objektsteifigkeit besteht darin, den Betrag der Beschleunigungsinformation a(10), a(20) aufzuintegrieren. Bei Objekten mit der gleichen Objektmasse $m_O$ ist der berechnete Wert des Integrals umso höher, je höherfrequenter die Schwingungen der Beschleunigungsinformationen a(10), a(20) sind, also umso härter das entsprechende Objekt ist. Figur 5 zeigt ein schematisches Diagramm, welches das 1. Betragsintegral M(10) des vom ersten Beschleunigungssensor 10 erfassten Beschleunigungssignals a(10) und das 1. Betragsintegral M(20) des vom zweiten Beschleunigungssensor 20 erfassten Beschleunigungssignals a(20) bei einer Kollision mit einem einen Fußgänger simulierenden Legform-Impaktor darstellt, und Figur 6 zeigt ein schematisches Diagramm des 1. Betragsintegrals M(10) des Beschleunigungssignals a(10) und das 1. Betragsintegral M(10) des Beschleunigungssignals a(20) bei einer Kollision mit einem sehr harten Gegenstand, beispielsweise mit einem Stahlrohr. Zusätzlich wird das gemittelte 1. Betragsintegral M(M) der beiden 1. Betragsintegrale M(10) und M(20) dargestellt. Wie durch einen Vergleich der Figuren 5 und 6 ersichtlich ist, erzeugt das härtere Stahlrohr mit gleicher Masse durch die höherfrequenteren Schwingungen größere 1. Betragsintegrale M(10), M(20), M(M) als ein Fußgänger, welcher durch den Legform-Impaktor simuliert wird.

Die Schätzung der Objektsteifigkeit $D_O$ kann beispielsweise auch durch eine Kombination von mehreren steifigkeitsabhängigen Merkmalen durchgeführt werden. Zusätzlich kann für die oben beschriebenen unterschiedlichen Möglichkeiten zur Schätzung der Objektsteifigkeit $D_O$ die ermittelte Objektmasse $m_O$ benutzt werden, wodurch die Genauigkeit der Schätzung der Objektsteifigkeit verbessert werden kann. Wie oben bereites ausgeführt ist werden bei einem System mit mehreren Sensoren 10, 20 die steifigkeitsabhängigen Merkmalen M(10), M(20) der einzelnen Sensoren 10, 20 mit oder ohne Gewichtung zu einem Merkmal M(M) gemittelt. Zusätzlich kann die Schätzung der Objektmasse $m_O$ rückwirkend durch Einbeziehen der Merkmale M(10), M(20), M(M) verbessert werden, welche zur Steifigkeitsschätzung benutzt werden.

Bei einer einfachen Ausführungsform des erfindungsgemäßen Verfahrens, werden zur Klassifizierung der Objekte die massenabhängigen Merkmale, z.B. dv, zu einem bestimmten Zeitpunkt nach einer Erkennung eines Objektaufpralls mit Ober- und Untergrenzen verglichen. Liegen die massenabhängigen Merkmale außerhalb dieser Grenzen, dann wird erkannt, dass das Objekt, z.B. ein Leitpfosten, zu leicht oder im Falle eines anderen Fahrzeugs zu schwer ist, um ein Mensch zu sein. Daher wird eine Auslösung der Fußgängerschutzmittel unterdrückt bzw. verhindert. Liegt das massenabhängige Merkmal jedoch zwischen diesen Grenzen, dann wird eine Auslösung ermöglicht. Analog wird mit den steifigkeitsabhängigen Merkmalen verfahren.

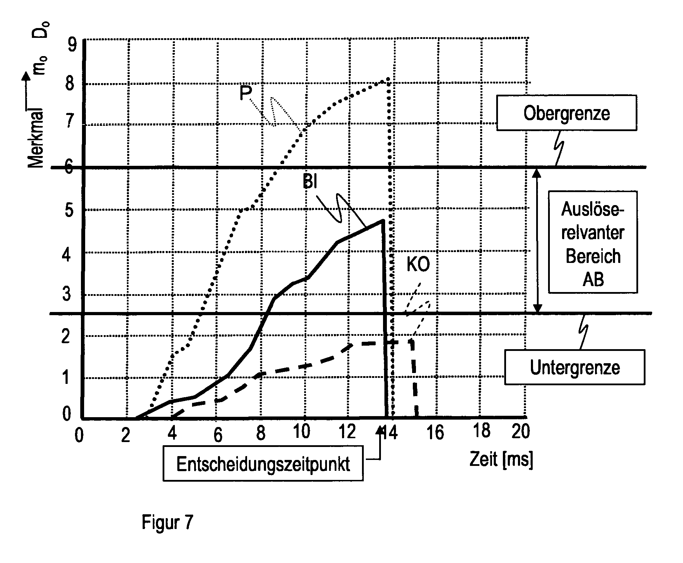

Fig. 7 zeigt Merkmalskennlinien P, BI, KO von drei verschiedenen Objekten die mit einer vorgegebenen Geschwindigkeit, beispielsweise 20km/h, mittig auf die Fahrzeugfront auftreffen. Eine gepunktete Merkmalskennlinie P repräsentiert einen Stahlpfosten, die durchgezogene Kennlinie BI repräsentiert den einen Fußgänger simulierenden Legform-Impaktor und die gestrichelte Kennlinie KO repräsentiert ein kleines leichtes Objekt. Die eingezeichnete Obergrenze und Untergrenze ergeben sich beispielsweise aus den Randbedingungen Fahrzeugeigengeschwindigkeit und Aufprallpunkt auf dem Fahrzeug.

Wie aus Fig. 7 ersichtlich ist, befindet sich zum Entscheidungszeitpunkt nur die Kennlinie BI innerhalb der oberen und unteren Grenze, so dass die Entscheidungslogik 110 nur für diesen Fall das Auslösesignal AS erzeugt. Die Kennlinie P befindet sich oberhalb der Obergrenze und die Kennlinie KO befindet sich unterhalb der Untergrenze, so dass die Entscheidungslogik 110 für diese beiden Fälle eine negative Auslöseentscheidung trifft, d.h. die Entscheidungslogik erzeugt kein Auslösesignal AS und die Fußgängerschutzvorrichtung wird nicht aktiviert. Die dargestellten Ober- und Untergrenzen können beispielsweise variabel ausgeführt sein und in Abhängigkeit von der vom CAN-Bussystem zur Verfügung gestellten Geschwindigkeit und/oder vom erkannten Auftreffpunkt und/oder von der Temperatur eingestellt werden. Da die Eigenschaften der Fahrzeugfront basierend auf den verwendeten Materialien mehr oder weniger stark von der Temperatur abhängig sind, können die Temperaturinformation, welche beispielsweise von einem Temperatursensor zur Verfügung gestellt werden, auch bei der Berechnung der verschiedenen Merkmale genutzt werden. Zusätzlich oder alternativ zur Erkennung des vorbestimmten Zeitpunkts können auch zeitabhängige Ober- und Untergrenzen verwendet werden. Bei einer vorteilhaften Erweiterung des erfindungsgemäßen Verfahrens können die Grenzen für die steifigkeitsabhängigen Merkmale, abhängig von den massenabhängigen Merkmalen eingestellt werden und/oder die Grenzen der masseabhängigen Merkmale können abhängig von den steifigkeitsabhängigen Merkmalen eingestellt werden.

Bei einer alternativen nicht dargestellten Ausführungsform des erfindungsgemäßen Verfahrens kann ein zwei- oder mehrdimensionaler Merkmalsraum aus masse- und steifigkeitsabhängigen Merkmalen aufgespannt werden, in dem eine Auslösung nur in bestimmten Gebieten ermöglicht wird, welche einen Menschen repräsentieren.

**Patentansprüche**

1. Verfahren zur Erzeugung eines Auslösesignals (AS) für eine Fußgängerschutzvorrichtung, bei welchem Sensordaten (a(10), a(20)) ermittelt und ausgewertet werden, wobei nach einer erkannten Kollision mit einem Objekt aus den Sensordaten (a(10), a(20)) Merkmale erzeugt werden, welche zur Ermittlung einer Objektmasse ($m_O$) und einer Objekthärte ($D_O$) ausgewertet werden, wobei das Auslösesignal (AS) für die Fußgängerschutzvorrichtung erzeugt wird, wenn die ermittelte Objektmasse ($m_O$) und die ermittelte Objekthärte ($D_O$) innerhalb eines Auslösebereichs (AB) liegen, welcher eine Kollision mit einem Fußgänger repräsentiert, wobei die Sensordaten (a(10), a(20)) Beschleunigungsinformationen umfassen, wobei zur Ermittlung der Objekthärte ($D_O$) eine Periodendauer der Beschleunigungsinformationen (a(1 0), a(20)) ausgewertet wird, wobei eine zur Objekthärte ($D_O$) korrespondierende Frequenz aus der Periodendauer bestimmt wird.

2. Verfahren nach Anspruch 1, **dadurch gekennzeichnet, dass** aus den Beschleunigungsinformationen zur Ermittlung der Objektmasse ($m_O$) ein erstes Integral berechnet wird, welches einer Geschwindigkeitsänderung (dv) entspricht, wobei die Objektmasse ($m_O$) bei einer bekannten Masse ($m_F$) einer Fahrzeugfront und einer bekannten Geschwindigkeit ($v_O$) vor der Kollision gemäß der Gleichung $m_O = -m_F * dv / (v_O + dv)$ ermittelt wird.

3. Verfahren nach Anspruch 1, **dadurch gekennzeichnet, dass** die ermittelte Objektmasse ($m_O$) bei der Auswertung und Bestimmung der Periodendauer der Beschleunigungsinformationen (a(10), a(20)) berücksichtigt wird.

4. Verfahren nach einem der Ansprüche 1 bis 3, **dadurch gekennzeichnet, dass** die Objekthärte ($D_O$) aus einer Schwingungsenergie abgeleitet wird, welche durch eine Integration eines Quadrates der Beschleunigungsinformation (a(10), a(20)) berechnet wird, wobei die berechnete Schwingungsenergie ein Maß für die Objekthärte($D_O$) ist, und wobei die Schwingungsenergie umso größer ist, je höherfrequent die Schwingungen sind.

5. Verfahren nach einem der Ansprüche 1 bis 4, **dadurch gekennzeichnet, dass** die Objekthärte ($D_O$) aus einem Betragsintegral der Beschleunigungsinformation (a(10), a(20)) abgeleitet wird, wobei die das berechnete Integral ein Maß für die Objekthärte ($D_O$) ist, und wobei das Integral umso größer ist, je höherfrequenter die Schwingungen sind.

6. Verfahren nach einem der Ansprüche 1 bis 5, **dadurch gekennzeichnet, dass** die ermittelte Objektmasse ($m_O$) bei der Ermittlung der Objekthärte ($D_O$) berücksichtigt wird.

7. Verfahren nach einem der Ansprüche 1 bis 6, **dadurch gekennzeichnet, dass** die Sensordaten (a(10), a(20)) von mehreren Sensoren (10, 20) zur Merkmalserzeugung mit oder ohne Gewichtung gemittelt werden.

8. Verfahren nach einem der Ansprüche 1 bis 7, **dadurch gekennzeichnet, dass** Grenzen des Auslösebereichs (AB) in Abhängigkeit von der Zeit und/oder vom Auftreffpunkt und/oder von der Geschwindigkeit und/oder von der Temperatur bestimmt werden.

9. Verfahren nach einem der Ansprüche 1 bis 8, **dadurch gekennzeichnet, dass** die Grenzen für den Auslösebereich (AB) der masseabhängigen Merkmale in Abhängigkeit von den steifigkeitsabhängigen Merkmalen festgelegt werden und/oder dass die Grenzen für den Auslösebereich (AB) der steifigkeitsabhängigen Merkmale in Abhängigkeit von den masseabhängigen Merkmalen festgelegt werden.

**Claims**

1. Method for generating a trigger signal (AS) for a pedestrian protection apparatus, in which sensor data (a(10), a(20)) is detected and evaluated, with features which are evaluated in order to detect an object mass ($m_O$) and an object hardness ($D_O$) being generated from the sensor data (a(10), a(20)) after a collision with an object is identified, with the trigger signal (AS) for the pedestrian protection apparatus being generated when the detected object mass

($m_o$) and the detected object hardness ($D_o$) are within a trigger range (AB) which represents a collision with a pedestrian, with the sensor data (a(10), a(20)) including acceleration information, with a cycle duration of the acceleration information (a(10), a(20)) being evaluated in order to detect the object hardness ($D_o$), with a frequency which corresponds to the object hardness ($D_o$) being determined from the cycle duration.

2. Method according to Claim 1, **characterized in that** a first integral which corresponds to a change in speed (dv) is calculated from the acceleration information for detecting the object mass ($m_o$), with the object mass ($m_o$) being detected in accordance with the equation $m_o = -m_F*dv/(v_o+dv)$ given a known mass ($m_F$) of a vehicle front and a known speed ($v_o$) before the collision.

3. Method according to Claim 1, **characterized in that** the detected object mass ($m_o$) is taken into account when evaluating and determining the cycle duration of the acceleration information (a(10), a(20)).

4. Method according to one of Claims 1 to 3, **characterized in that** the object hardness ($D_o$) is derived from a vibration energy which is calculated by integration of a square of the acceleration information (a(10), a(20)), with the calculated vibration energy being a measure of the object hardness ($D_o$), and with the vibration energy being greater the higher the frequency of the vibrations.

5. Method according to one of Claims 1 to 4, **characterized in that** the object hardness ($D_o$) is derived from a magnitude integral of the acceleration information (a(10), a(20)), with the calculated integral being a measure of the object hardness ($D_o$), and with the integral being greater the higher the frequency of the vibrations.

6. Method according to one of Claims 1 to 5, **characterized in that** the detected object mass ($m_o$) is taken into account when detecting the object hardness ($D_o$).

7. Method according to one of Claims 1 to 6, **characterized in that** the sensor data (a(10), a(20)) from a plurality of sensors (10, 20) is averaged with or without weighting in order to generate a feature.

8. Method according to one of Claims 1 to 7, **characterized in that** boundaries of the trigger range (AB) are determined as a function of time and/or impact point and/or speed and/or temperature.

9. Method according to one of Claims 1 to 8, **characterized in that** the boundaries for the trigger range (AB) of the mass-dependent features are defined as a function of the rigidity-dependent features, and/or **in that** the boundaries for the trigger range (AB) of the rigidity-dependent features are defined as a function of the mass-dependent features.

**Revendications**

1. Procédé pour générer un signal de déclenchement (AS) pour un dispositif de protection des piétons selon lequel, on détermine et on exploite des données de capteur (a(10), a(20)), et après une collision détectée avec un objet, on génère des caractéristiques à partir des données de capteur (a(10), a(20)), pour déterminer une masse d'objet ($m_0$) et une dureté d'objet ($D_0$),

le signal de déclenchement (AS) étant généré pour le dispositif de protection de passagers si la masse d'objet ($m_0$), obtenue et la dureté d'objet ($D_0$) déterminée se situent dans une plage de déclenchement (AB) représentant une collision avec un piéton,

des données de capteur (a(10), a(20)) comprenant des informations d'accélération, et

pour déterminer la dureté de l'objet ($D_0$), on exploite une durée de période des informations d'accélération (a(10), a(20)),

on détermine une fréquence correspondant à une dureté d'objet ($D_0$) à partir de la durée de la période.

2. Procédé selon la revendication 1,
**caractérisé en ce qu'**
à partir des informations d'accélération, pour déterminer la masse de l'objet ($m_0$), on calcule une première intégrale qui correspond à une variation de vitesse (dv), et on détermine la masse de l'objet ($m_0$) pour une masse connue ($m_F$) d'un front de véhicule et d'une vitesse connue ($v_0$) avant la collision selon l'équation ($m_0 = m_F * dv / (v_0 + dv)$).

3. Procédé selon la revendication 1,
**caractérisé en ce qu'**

on tient compte de la masse d'objet ($m_0$) déterminée pour l'exploitation et la détermination de la durée de la période des informations d'accélération (a(10), a(20)).

4. Procédé selon l'une quelconque des revendications 1 à 3,
   **caractérisé en ce qu'**
   on déduit la dureté de l'objet ($D_0$) à partir de l'énergie d'oscillation calculée par l'intégration du carré de l'information d'accélération (a(10), a(20)),
   l'énergie d'oscillation calculée étant une mesure de la dureté de l'objet ($D_0$), et
   l'énergie d'oscillation étant d'autant plus grande que la fréquence des oscillations est élevée.

5. Procédé selon l'une quelconque des revendications 1 à 4,
   **caractérisé en ce qu'**
   on déduit la dureté de l'objet ($D_0$) à partir d'une intégrale d'amplitude de l'information d'accélération (a(10), a(20)),
   l'intégrale calculée étant une mesure de la dureté de l'objet ($D_0$), et
   l'intégrale étant d'autant plus grande que la fréquence des oscillations est élevée.

6. Procédé selon l'une quelconque des revendications 1 à 5,
   **caractérisé en ce qu'**
   on tient compte de la masse d'objet ($m_0$), obtenue pour déterminer la dureté de l'objet ($D_0$).

7. Procédé selon l'une quelconque des revendications 1 à 6,
   **caractérisé en ce qu'**
   on fait la moyenne des données de capteur (a(10), a(20)) de plusieurs capteurs (10, 20) pour générer une caractéristique avec ou sans pondération.

8. Procédé selon l'une quelconque des revendications 1 à 7,
   **caractérisé en ce qu'**
   on détermine les limites de la plage de déclenchement (AB) en fonction du temps et/ou du point d'impact et/ou de la vitesse et/ou de la température.

9. Procédé selon l'une quelconque des revendications 1 à 8,
   **caractérisé en ce qu'**
   on fixe les limites de la plage de déclenchement (AB) des caractéristiques dépendant de la masse en fonction des caractéristiques dépendant de la rigidité et/ou les limites de la plage de déclenchement (AB) des caractéristiques dépendant de la rigidité en fonction des caractéristiques dépendant de la masse.

30

110

CAN-BUS

Entscheidungslogik

AS

20

a(20)

Sensor links

Merkmalsextraktion

Sensor rechts

$m_o$   $D_o$

a(10)

10

100

40

Figur 1

| | Großer Stahlpfahl | Betonwand |
|---|---|---|
| **hart** Golfball | Mülleimer | Anderes Fahrzeug |
| Begrenzungs-pfahl Vogel Katze | Fußgänger | |
| **weich** Ball | AB | |

Objektsteifigkeit

leicht                          schwer

Objektgewicht

Figur 2

Figur 3

Figur 4

Figur 5

Figur 6

Figur 7

**EP 1 863 682 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1691213 A1